(19) Europäisches Patentamt / European Patent Office / Office européen des brevets

(11) **EP 3 059 738 B1**

(12) **EUROPEAN PATENT SPECIFICATION**

(45) Date of publication and mention of the grant of the patent:
**20.11.2019 Bulletin 2019/47**

(21) Application number: **14854066.9**

(22) Date of filing: **29.09.2014**

(51) Int Cl.:
**G21C 17/01** (2006.01)        **G21C 17/003** (2006.01)
**G21D 3/00** (2006.01)

(86) International application number:
**PCT/CN2014/087770**

(87) International publication number:
**WO 2015/055085 (23.04.2015 Gazette 2015/16)**

(54) **INTELLIGENT TESTING METHOD OF NONDESTRUCTIVE ROBOT TESTING BASED ON VIRTUAL REALITY TECHNOLOGY**

INTELLIGENTES TESTVERFAHREN ZUR ZERSTÖRUNGSFREIEN ROBOTERPRÜFUNG AUF DER BASIS VON VIRTUAL-REALITY-TECHNOLOGIE

PROCÉDÉ D'ESSAI INTELLIGENT POUR RÉALISER DES ESSAIS NON DESTRUCTIFS PAR ROBOT EN SE BASANT SUR LA TECHNOLOGIE DE RÉALITÉ VIRTUELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2013 CN 201310493138**

(43) Date of publication of application:
**24.08.2016 Bulletin 2016/34**

(73) Proprietors:
- **CGNPC Inspection Technology Co., Ltd.**
  **Shenzhen, Guangdong 518000 (CN)**
- **Suzhou Nuclear Power Research Institute**
  **Suzhou, Jiangsu 215004 (CN)**
- **China General Nuclear Power Corporation**
  **Shenzhen, Guangdong 518000 (CN)**

(72) Inventors:
- **WANG, Keqing**
  **Shenzhen, Guangdong 518000 (CN)**
- **HUANG, Xiaochen**
  **Shenzhen, Guangdong 518000 (CN)**
- **ZHU, Xuehong**
  **Shenzhen, Guangdong 518000 (CN)**
- **CHEN, Jian**
  **Shenzhen, Guangdong 518000 (CN)**
- **LI, Ming**
  **Shenzhen, Guangdong 518000 (CN)**
- **LIN, Ge**
  **Shenzhen, Guangdong 518000 (CN)**

- **CHEN, Huaidong**
  **Shenzhen, Guangdong 518000 (CN)**
- **LIN, Zhongyuan**
  **Shenzhen, Guangdong 518000 (CN)**
- **DING, Chengjun**
  **Shenzhen, Guangdong 518000 (CN)**
- **ZHANG, Minglu**
  **Shenzhen, Guangdong 518000 (CN)**

(74) Representative: **Gulde & Partner**
**Patent- und Rechtsanwaltskanzlei mbB**
**Wallstraße 58/59**
**10179 Berlin (DE)**

(56) References cited:
CN-A- 101 434 067        CN-A- 102 629 110
JP-A- H04 269 185        JP-A- 2012 042 379
US-A- 3 862 578          US-A- 5 809 099

- MUTKA A ET AL: "Control system for reactor vessel inspection manipulator", CONTROL APPLICATIONS, (CCA)&INTELLIGENT CONTROL, (ISIC), 2009 IEEE, IEEE, PISCATAWAY, NJ, USA, 8 July 2009 (2009-07-08), pages 1312-1318, XP031542813, ISBN: 978-1-4244-4601-8
- LIU, CHANG'AN ET AL.: 'Research on kinematics simulation of maintenance and inspection robot in nuclear power plants.' JOURNAL OF HUAZHONG UNIVERSITY OF SCIENCE AND TECHNOLOGY. vol. 36, 31 October 2008, pages 23 - 26, XP008183623

**Description**

TECHNICAL FIELD

The present invention belongs to the technical field of a surface test, and specifically relates to an intelligent testing method of a non-destructive testing robot based on virtual reality technology in a nuclear reactor pressure vessel.

BACKGROUND TECHNOLOGY

Nowadays in the technical field of nuclear power test, a non-destructive test is generally used to reduce the effect of testing personnel and an object to be tested. Without harming or affecting the usability of the object to be tested, a non-destructive test is to test if there is any defect or non-uniformity by using characteristics like sound, light, magnetism, electricity, etc. of the object to be tested and to show information like the size, position, property and quantity, etc. of a defect. There are mainly four types of the non-destructive test: the radiation test (RT), the ultrasonic test (UT), the magnetic particle test (MT) and the liquid permeation test (PT). Other non-destructive testing methods comprises the eddy current test (ET), the acoustic emission test (AT), the thermal imagery/infrared (TIR), the leakage test (LT), the alternating current field measurement technology (ACFMT), the magnetic flux leakage inspection (MFL), the remote field test method (RFT) and the ultrasonic wave time of flight diffraction method (TOFD), etc.

Compared to destructive tests, a non-destructive test has the following characteristics: (1) non-destructive: because the usability of the object will not be harmed when being tested. (2) comprehensiveness: because the test is non-destructive, a 100% comprehensive test can be performed to the object to be tested when necessary, which is impossible for destructive tests. (3) full course: destructive tests are generally appropriate for tests of raw materials, such as stretching, compression, bending, etc. that are usually used in mechanical engineering. Destructive tests are conducted to raw materials for manufacturing, but destructive tests cannot be performed to finished goods and goods-in-use unless they will no longer continue to serve; however a non-destructive test will not harm the usability of the object to be tested. Therefore, it can be used not only in the comprehensive tests for raw materials for manufacturing, intermediate processes and final finished goods, but also in the tests for a device in service.

There are plenty of parts with irregular shapes in the nuclear reactor pressure vessel, and a manual mode is generally used in surface ultrasonic/eddy current tests for the parts of this type at present. The non-graphics or two-dimension graphical display control method is used by the control software of nuclear reactor pressure vessel non-destructive testing robots, which are developed and used by available companies that are professional in the non-destructive test in the field of nuclear power at home and abroad. Followings are the main drawbacks of this display control method: 1. Because of the importance of a nuclear reactor pressure vessel for the safe operation of a nuclear power station, the non-destructive test procedure thereof must also be safe and controllable. Because of the environment where the nuclear reactor pressure vessel is arranged and shape characteristics thereof, each axle will be in the environment in which human supervisory and camera tests can hardly be operated in a comprehensive monitoring mode after the installation of testing robots. It is difficult to guarantee the safety of all movement of the testing robots by a non-graphics display control method under the condition that the postures of the robots and the position relationships with respect to the pressure vessel are uncertain. 2. The position relationship between a linear movement axis and the reactor pressure vessel can be displayed by two-dimension graphics in a plane by using the two-dimension graphical display control, however the postures and the position relationships of all axes of actual devices cannot be displayed. In order to make the non-destructive robot arrive at a targeted testing position, operation personnel needs adjust iteratively on basis of their experience, and excessive adjustment results in low movement efficiency, high probability of device malfunction and mal-operation, and low movement control efficiency. Existing control technologies in the movement of each axis of a robot need iterative manual adjustment on basis of experience by operation personnel if some specific positions are to be avoided or arrived at, the efficiency for performing a non-destructive test is low, and it is unable to operate and control movement online. It is why the present invention appears.

Mutky, Alan, et al.: "Control System For Reactor Vessel Inspection Manipulator", 18th IEEE Intl. Conf. on Control Applications, Part of 2009 IEEE Multi-conference on Systems and Control, Saint Petersburg, Russia, July 8-10, 2009, p. 1312 - 13, 18 describe a 3D visualization of a manipulator for weld inspection of nuclear reactor vessels.

US 3 862 578 A discloses a testing robot having several inspection tools and pneumatic centring devices for a nuclear reactor pressure vessel.

CONTENT OF THE INVENTION

The purpose of the present invention is to provide an intelligent testing method of a non-destructive testing robot based on virtual reality technology. A high technical level and rich adjustment experience are required for operation personnel to adjust iteratively and control movement when a non-destructive test is performed by a non-destructive robot with the non-graphics display control or the two-dimension graphical control in the prior art. Technical problems will be solved in the present invention like low efficiency in a non-destructive test and frequent adjustment on basis of experience required for a test, etc.

In order to solve these problems in the prior art, the present invention provides the technical consisting in the subject-matter of claim 1.

Compared with solutions in the prior art, the advantages of the present invention are that:

compared with the existing manual scanning and searching mode, the testing procedure is effectively simplified, the testing precision and speed are improved, and the radiation dose level for testing personnel is decreased by the non-destructive testing robot intelligent testing system and the intelligent testing method in the present invention. Three-dimension virtual reality technology is applied to the implementation of non-destructive testing projects by a reactor pressure vessel non-destructive testing robot through the establishment of a three-dimension virtual environment, the modeling of three-dimension robots and the parts to be tested, the establishment of the global coordinate and movement degrees-of-freedom coordinate system of the robot, the calculation of graphical transformation algorithms, the mechanism of driving the graphical transformation, and the mode for controlling and displaying. A comprehensive, three-dimension display and control mode is realized. Safety to implement site projects is greatly improved, efficiency of project implementation is increased, control efficiency and control performance of a robot are improved, unnecessary operations are decreased, error occurring probability due to human factors is decreased, and the integral performance stability, safety and operability of a robot control system are improved.

DESCRIPTION OF THE DRAWINGS

The present invention will be further described in combination with the drawings and embodiments below:

Figure 1 is the structural block diagram of a non-destructive testing robot intelligent testing system;
Figure 2 is the connection schematic diagram of a non-destructive testing robot intelligent testing system during a testing task;
Figure 3 is a structural schematic diagram of a non-destructive testing robot;
Figure 4 is the virtual simulation flowchart of a non-destructive testing robot intelligent testing system during a testing task in a three-dimension environment;
Figure 5 is the coordinate transformation schematic diagram of a non-destructive testing robot simulation model and an actual non-destructive testing robot;
Figure 6 is the specific operating flowchart for a non-destructive testing robot intelligent testing system during a testing task;
Figure 7 is the synchronous movement flowchart of a non-destructive testing robot simulation model and an actual non-destructive testing robot;
Figure 8 is the calibration flowchart of an actual non-destructive testing robot;
Figure 9 is the schematic diagram about the progress of transformation between feedback and coordinate of a non-destructive testing robot simulation model and an actual non-destructive testing robot during movement.
Figure 10 is the overall flowchart of a non-destructive testing robot intelligent testing system during a testing task.

SPECIFIC EMBODIMENTS

The above solution will be further illustrated below in combination with specific embodiments. It should be appreciated that these embodiments are for the purpose of illustrating the present invention but not for limiting the scope thereof. Implement conditions used in the embodiments can be further adjusted according to the condition of a specific manufacturer, and unspecified implement conditions are usually the conditions in conventional experiments.

EMBODIMENTS

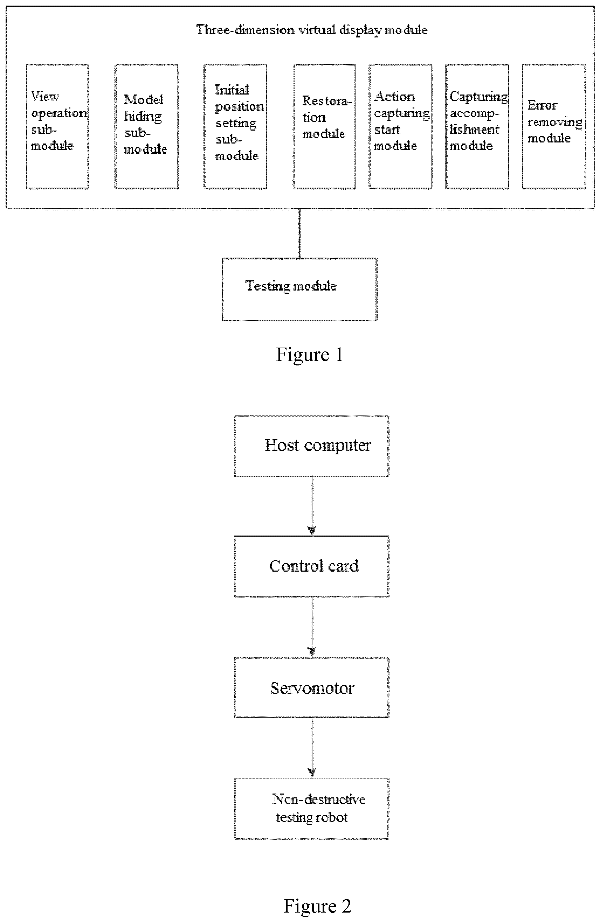

As shown in Figure 1, the non-destructive testing robot intelligent testing system comprises a non-destructive testing robot simulation model and a reactor pressure vessel simulation model, which are established by using virtual reality technology. The non-destructive testing robot for the non-destructive test is installed to a pre-determined position inside the reactor pressure vessel to be tested. The end position of one degrees-of-freedom movement axis is calibrated and a working zero-point is determined after each movement axis of the non-destructive testing robot is recovered to an initial state. A global coordinate system and an axle coordinate system are established by using the working zero-point as the zero-point. A three-dimension virtual display module is provided for establishing corresponding relationship between the non-destructive testing robot simulation model and the calibrated and simulated non-destructive testing robot, and establishing a corresponding relationship between the reactor pressure vessel simulation model and the calibrated and simulated reactor pressure vessel. A testing module is provided for the position and the posture transforming of the non-destructive testing robot simulation model in the three-dimension virtual environment on basis of the feedback values of the position and the posture information of each degree-of-freedom movement axis of the non-destructive testing robot acquired real-time. The testing module is also provided for virtually displaying and controlling the non-destructive testing robot for the non-destructive test.

Among other things, the three-dimension virtual display module comprises a view operation sub-module for performing a standard view operation and an arbitrary visual angle adjusting operation to the non-destructive testing robot simulation model and the reactor pressure vessel simulation model in a usage scenario. A model blanking module for performing a display operation and a hide operation to the environment where non-destructive testing robot simulation model and the reactor pressure vessel simulation model are located. An initial position setting module for traversing the current positions of all parts in a model assembly for the initial position and posture data of each part in the non-destructive testing robot simulation model and the reactor pressure vessel simulation model, and storing the position information into a database for updating. A restoration module is provided for reading the initial position information of all parts of the model assembly in the database and moving the corresponding module to the initial position. A motion capture starting module for calculating the next working position of the model using the current position of the model as a benchmark. A capture terminating module for pausing the model movement; an error removing module for removing movement error of the model to realize the position unification of the simulated model and the actual object.

As shown in Figure 2, the non-destructive testing robot intelligent testing system is installed on a host computer and is connected with a control card to control the non-destructive testing robot. An ultrasonic testing probe or an eddy current testing probe is fixed on each axis of the non-destructive testing robot. The non-destructive testing robot is provided with 11 movement axes, wherein at least 2 movement axes are provided with 4-degree-of-freedom. The 4-degree-of-freedom are the X axis movement, the Y axis movement, the Z axis movement that can be moved precisely within a pre-determined space and the W axis movement for rotationally moving within the scope of 360° in the pre-determined space, respectively. These movement axes are connected with a servomotor (which may be a single servomotor and also may be a plurality of servomotors for driving movement axes) and the movement stepping or rotational angel is controlled through the control card or the control box.

Among other things, the X axis movement is the rectilinear motion of the X axis in the horizontal direction inside the nuclear power station reactor pressure vessel. Y axis movement is the rectilinear motion of the axis in the horizontal direction in the three-dimension space coordinate system and is perpendicular to the direction of the X axis movement. axis movement is the rectilinear motion of the Z axis in the vertical direction in the three-dimension space coordinate system and is perpendicular to the direction of the X axis movement and to a plane that is formed by the X axis movement. W axis movement is the rotational motion of the W axis within a 360° scope in the three-dimension space coordinate system.

The principle and the procedure of the movement will be specifically described in the process of obtaining motion trails.

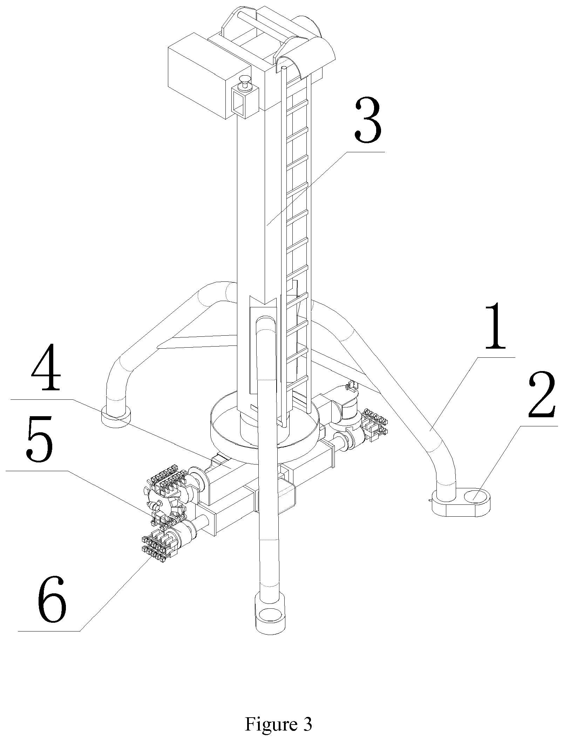

The non-destructive testing robot, as shown in Figure 3, is provided with installation arms 1 (there are three arms for supporting the non-destructive testing robot and are cooperatively installed on an installation station) that cooperate with a specific installation station in a nuclear power station reactor pressure vessel. A pneumatic centering device 2 is arranged at the end of each installation arm to plug with the specific installation station of the nuclear power station reactor pressure vessel. The installation arms are fixedly connected with the body of the non-destructive testing robot -- upright posts 3, the lower end of which is provided with a plurality of mechanical arms 4 for the non-destructive test on basis of the conditions of the parts to be tested inside the nuclear power station reactor pressure vessel. Flange scan mechanical arms, nozzle scan mechanical arms and lower head scan mechanical arms, etc. can be provided on basis of the conditions of the parts to be tested inside the nuclear power station reactor pressure vessel. Each mechanical arm is provided with a plurality of degree-of-freedom axes. A front end revolution joint 5 can be arranged at the end position of the movement axis according to actual conditions, a probe tool holder 6 that is connected with a testing probe is fixed on the front end revolution joint, and the probe can be transported to a target position through the movement axis.

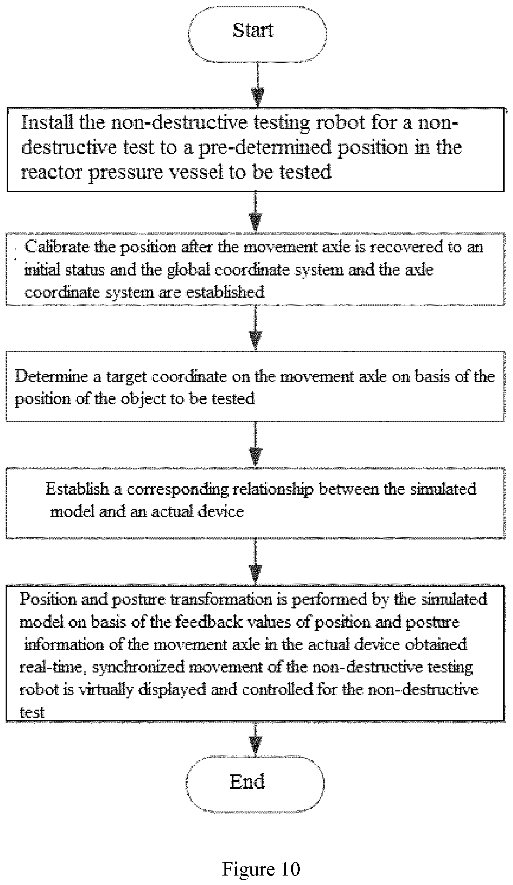

As shown in Figure 10, a non-destructive test inside the nuclear power station reactor pressure vessel is performed specifically in accordance with the following steps:

> 1. The reactor pressure vessel non-destructive testing robot is installed on a reactor pressure vessel to be tested in accordance with a specified installation position.
> The specific installation process will no longer be elaborated. Many installation stations are pre-determined inside the nuclear power station reactor pressure vessel, and the non-destructive testing robot will be installed to the pre-predetermined stations by operation personnel in the nuclear power station according to the prompt on an installation guide post.
> 2. The position calibration of one degree-of-freedom movement axis of the reactor pressure vessel non-destructive testing robot is performed, and the only one working zero-point, a global coordinate system and an axle coordinate system are determined.

Normally, each movement axis of the non-destructive testing robot is recovered to an initial state and the position of one degree-of-freedom movement axis is calibrated as the working zero-point. For example, the end position of a vertical degrees-of-freedom movement axis of the post is calibrated as the coordinate of the zero-point (0,0,0). After each degree-of-freedom movement axis of the non-destructive testing robot is recovered to the initial state, position calibration of each degree-of-freedom movement axis is performed, the end position of one degree-of-freedom movement axis is calibrated as the working zero-point, and the global coordinate system and the axle coordinate system for each degrees-of-freedom movement axis are established.

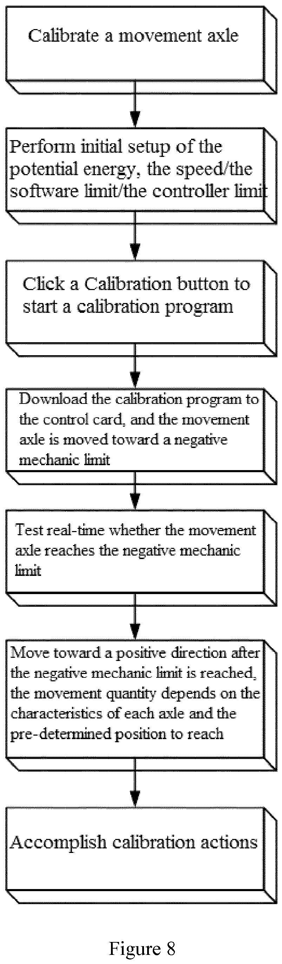

As shown in Figure 8, the steps for calibrating the positions on each degrees-of-freedom movement axis comprise:

(1) an initial setup of the potential energy, the speed, the software limit and the controller limit of each degree-of-freedom movement axis is performed in advance;
(2) the movement axis moves toward negative mechanical limit after the calibration is started, and the movement axis is detected real-time to determine whether it arrives at the negative mechanical limit;
(3) movement in a positive direction is conducted after the negative mechanical limit is reached, and the movement amount is determined according to the characteristics of each degree-of-freedom movement axis and the predetermined position to arrive;
(4) the parameters of each degree-of-freedom movement axis are determined through the calibration after the calibration is completed.

When the testing system is established as software, firstly an initial setup of the potential energy, the speed, the software limit and the controller limit is performed. Then the calibration is performed by using the software. The calibration program is downloaded to the control card, the movement axis moves toward the negative mechanical limit, and the movement axis is detected real-time to determine whether it arrives at the negative mechanical limit. Movement in a positive direction is conducted after the negative mechanical limit is reached, the movement quantity depends on the characteristics of each axis and the pre-determined position to reach, and the calibration action is completed.

3. Devices are connected, a control interface by three-dimension display is started, and a corresponding relationship among the calibrated robot, the non-destructive testing robot in the three-dimension environment and the reactor pressure vessel is established.

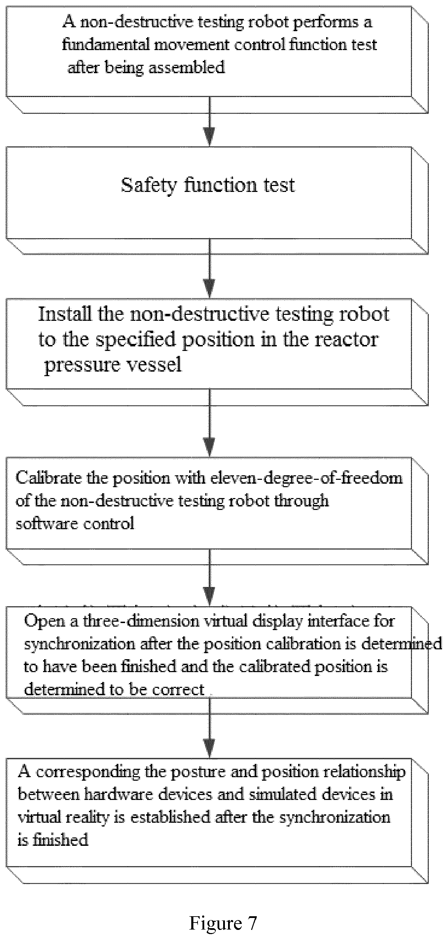

As shown in Figure 7, the corresponding relationship between the simulation models and the simulated hardware device is established in accordance with the following steps in the method:

1) a movement control function and a safety function are tested after each part of the non-destructive testing robot is assembled to ensure the normal operation of the hardware device;
2) the non-destructive testing robot is installed to a given position in the reactor pressure vessel and then the position calibration of each degree-of-freedom movement axis of the non-destructive testing robot is performed;
3) after the position calibration of each degree-of-freedom movement axis, the calibration is determined to be accurate. The non-destructive testing robot simulation model and the reactor pressure vessel simulation model are initiated for synchronous processing, the reactor pressure vessel simulation model is used as an application scenario, and each degree-of-freedom movement axis of the non-destructive testing robot simulation model is synchronized to the position coordinate after the calibration;
4) the corresponding position and posture relationship between the hardware device and the simulation device in virtual reality is established after the synchronization is completed.

Among other things, a fundamental movement control function test and a safety function test are performed after the non-destructive testing robot is assembled. After the software is formed by the system, the position calibration of 11-degree-of-freedom of the non-destructive testing robot is performed by the software. The three-dimension display interface is opened for synchronization after it has been determined that the position calibration is completed and correct, and the corresponding posture and position relationship between the hardware device and the simulated device in virtual reality is established after the synchronization.

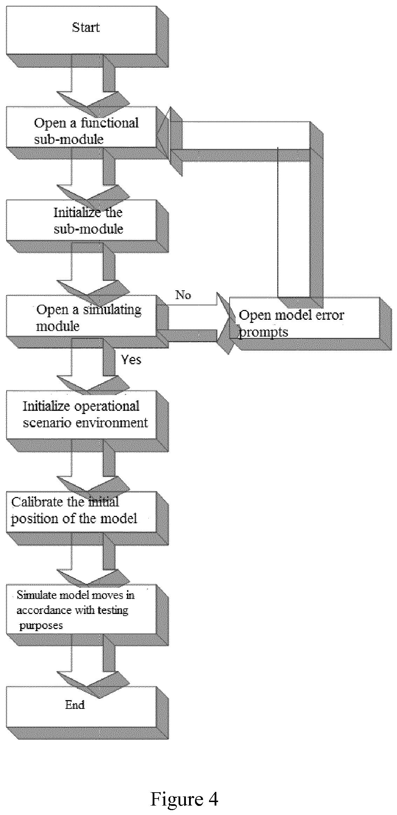

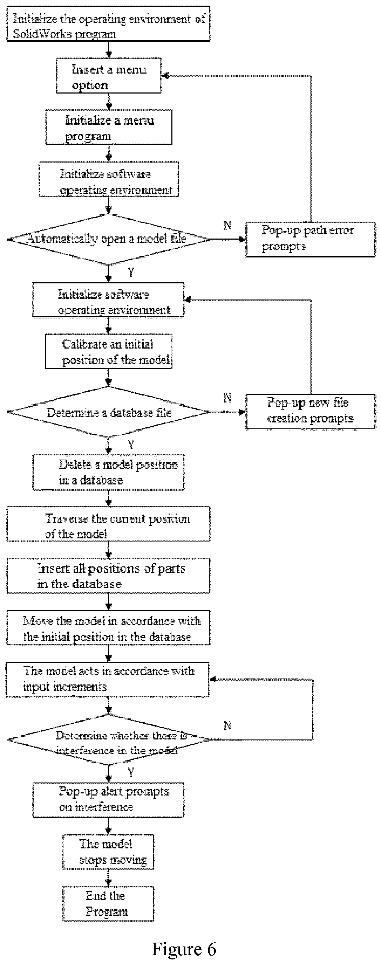

As shown in Figure 4 and Figure 6, the non-destructive testing robot simulation model and the reactor pressure vessel simulation model have been established at the time. The establishment method can use the SolidWorks software as the display software, secondary development is performed on the foundation thereof, the functions of the three-dimension software itself are called through the API provided by the SolidWorks software, and software modules with specific functions are directly developed on basis of available functions. If the Visual C# software is used for the secondary development, plugin programs are written in SolidWorks and three-dimension models in the SolidWorks software are controlled by the plugin programs.

For the connection relationship of the specific architectures of the non-destructive testing robot and the reactor pressure vessel, the simulation models of various non-destructive testing robots and reactor pressure vessels are established by using the API provided by SolidWorks software. The three-dimension real-time display interface is provided for displaying an operation environment that is consistent with site conditions and displaying real-time the operation conditions of the non-destructive testing robot inside the reactor pressure vessel, and the standard views and views with arbitrary angles of the simulated models can be adjusted without any distortion or deformation in graphics. Moreover, for the convenience in expressing the models, operations of displaying and hiding the environment in which the models are located are added. These constitute the sub-module of the three-dimension virtual display module.

The adjustment of the standard views and the views with arbitrary angles of the simulated models can be achieved by a view operation sub-module without any distortion and deformation in graphics. The virtual models can be adjusted in an arbitrary angle, the models can be zoomed in and zoomed out real-time during the capturing procedure, and adjustments of the views can mainly be categorized into two adjustment modes. The first one is an arbitrary angle-of-view adjusting mode that can perform adjustments in an arbitrary angle, in which an angle to be rotated is input, and model angle adjustment in an arbitrary angle is achieved through clicking a corresponding adjustment button. The second one is a standard view operating mode, in which API functions of SolidWorks are called, a button is added onto a programming interface and the standard view operations like a front view, a bottom view and a right side view, etc. are achieved.

A model hiding module is used for the convenience of expressing a model, the nuclear reactor pressure vessel simulation model is displayed and hidden in a segment mode through clicking corresponding display and hiding buttons.

4. the motion of the robot is controlled by the control software and the encoder feedback values of each axis are obtained real-time. The feedback values represent the position and posture information of the robot on each degree-of-freedom movement axis. Through resolving factors like the global coordinate system, the movement axis degree-of-freedom coordinate system and robot movement models, etc., the three-dimension model can calculate actual movement values and the robot's present postures to drive matrix calculation. Hereby accomplishing the accurate transformation of the robot model with respect to the reactor pressure vessel model in the three-dimension virtual environment, so that the virtual display and control function reflecting the robot and the tested devices is accomplished.

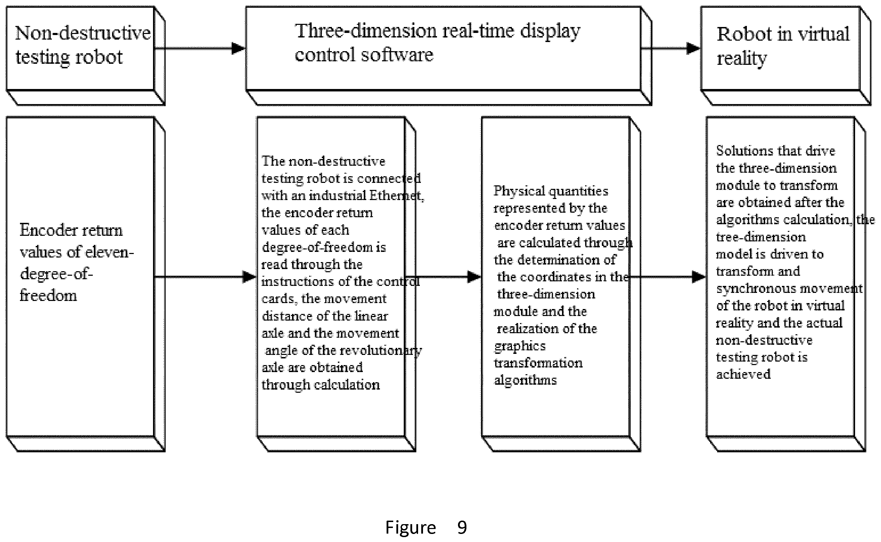

As shown in Figure 9, the specific steps to control the non-destructive testing robot for synchronized movement comprise:

1) the encoder feedback values of each degree-of-freedom movement axis of the non-destructive testing robot are sent to a control card or a control box according to a preset period after each degree-of-freedom movement axis of the non-destructive testing robot is moved;
2) the encoder feedback values of each degree-of-freedom movement axis of the non-destructive testing robot are read by the control card or the control box and are transformed to obtain the movement distance of a linear axis and the movement angles of a rotating axis in each degree-of-freedom movement axis of the non-destructive testing robot;
3) through the determination of a three-dimension coordinate and a graphical transformation algorithm, by the non-destructive testing robot simulation model and the reactor pressure vessel simulation model, actual physical quantity represented by the encoder feedback values is resolved to obtain a solution for driving the non-destructive testing robot simulation model to be transformed. The non-destructive testing robot simulation model is driven to be transformed. Synchronized movement of the non-destructive testing robot simulation model in virtual reality and the actual non-destructive testing robot is achieved.

Among other things, functions like view transformation, part hiding and interference testing, etc. can be realized to the three-dimension virtual reality interface by operation personnel according to the conditions like operation habits, the movement trails of the operated robot and monitoring specification, etc.

The non-destructive testing robot simulation model is used for three-dimension and virtually displaying the movement procedure of the non-destructive testing robot. The reactor pressure vessel simulation model is used for three-dimension and virtually displaying the movement procedure of the reactor pressure vessel, and because the reactor pressure vessel is in a stationary state during the testing procedure, the reactor pressure vessel simulation model can be used as a usage scenario. Model hiding can be achieved by the reactor pressure vessel simulation model through displaying and hiding parts, which is convenient for a user to observe during usage. Moreover, the capture and the calculation of movement axis actions are required except for these functions of the non-destructive testing robot simulation model for the convenience of testing.

Algorithms for displaying are required when virtual display is performed by these simulating models. In order to guarantee the instantaneity of simulation and data transmission, the accurate construction of an overall model and the rationality of the algorithms for displaying are required. Among other things, the overall model can be constructed in accordance with a pre-determined ratio with reference to a physical model; however, the algorithms for displaying is constructed by using computer graphics and the rationality of the algorithms are verified through simulation experiments.

The essence of computer graphics is coordinate transformation, a coordinate is established for the moving and rotational joint of the non-destructive testing robot in accordance with the rules of graphics transformation in computer graphics. Then the coordinate is transformed accordingly to obtain a joint variant parameter table, plugging which into an equation to obtain the changing rule of each joint, and it is done when the rule is written into a program.

According to the difference between the establishment positions of the coordinate systems for a joint, the establishment of the coordinate system in computer graphics can generally be categorized into a coordinate system preposition method and a coordinate system postposition method.

The preposition method is used in the technical solution of the present invention, the non-destructive testing robot in the present invention can be regarded as an assembly of a group of linkages, and the linkages are connected with each other through a kinematic pair. The relative movement between them is constraint by the joint for connecting two linkages. The kinematic chain of the non-destructive testing robot is composed of two categories of linkages: middle linkages and terminal linkages. One terminal linkage is used as a fundamental linkage and then is used to connect a joint, which then is connected to a middle linkage, which is then connected with a joint, which is then connected with a middle linkage, and so on, and at last a joint is connected with another terminal linkage. The linkages from the fundamental linkage to a terminal executor is numbered as 0, 1, 2, ..., n successively, the kinematic pair for connecting the $(i-1)^{th}$ linkage and the $i^{th}$ linkage is written as the $i^{th}$ joint, and then the mechanic body can be regarded as being composed of $(n+1)$ linkages and n joints. The $i^{th}$ coordinate system is established at the $i^{th}$ joint, the coordinate $F_i$ defined by the original point $O_i$ and the coordinate axles $X_i$, $Y_i$ and $Z_i$ is fixed to the $(i-1)^{th}$ linkage, and the coordinate system is defined according to the following rules:

1. $Z_i$ is defined as the axis of the $i^{th}$ joint. There two possibilities on the positive direction of the axis, moreover, the $Z_i$ axle of a moving joint can be arbitrarily positioned because the direction thereof is defined by the kinematic pair.
2. $X_i$ is defined as the common perpendicular line of $Z_i$ and $Z_{i-1}$, the direction thereof is that the former points to the latter. If $Z_{i-1}$ intersects with $Z_i$, the positive direction of $X_i$ is uncertain and can be assigned arbitrarily. It is specified under the circumstances that if unit vectors $i_i$, $K_{i-1}$ and $k_i$ are fixed on $X_i$, $Z_{i-1}$ and $Z_i$, respectively, $i_i$ would be defined as $k_{i-1} \times k_i$. If $Z_{i-1}$ is parallel with $Z_i$, the position of $X_i$ is uncertain. To guarantee the uniqueness of the definition, it is specified that $X_i$ passes the original point of the $(i-1)^{th}$ coordinate system.
3. The distance between $Z_i$ and $Z_{i+1}$ is defined as $a_i$, which is a non-negative value.
4. The coordinate of $Z_i$, the point of intersection of $Z_i$ and $X_{i+1}$, is written as $b_i$. Because this variant is a coordinate, it can be positive or negative. The absolute value thereof is the distance between $X_i$ and $X_{i+1}$, which is referred to as the deviation between continuous common perpendicular lines.
5. The angle between $Z_i$ and $Z_{i+1}$ is defined as $\alpha_i$, whose positive direction of measurement is defined with respect to $X_{i+1}$. This variant is referred to as the torsional angle of a continuous pair of axles.
6. The angle between $X_i$ and $X_{i+1}$ is defined as $\theta_i$, whose positive direction of measurement is defined with respect to $Z_i$.

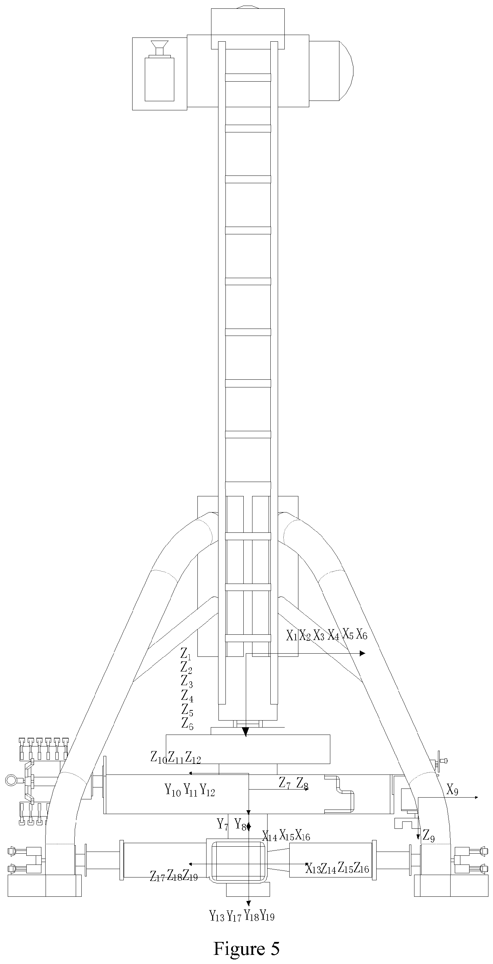

The global coordinates for the integrity of the non-destructive testing robot are established in accordance with this category of definition. Shown in Figure 5 is a schematic diagram of the global coordinates established for the non-destructive testing robot. The corresponding parameter table is shown in Table 1, and then the graphical transformation equation can be calculated.

Table 1 Graphical transformation parameter table

| Index j | Linkage i~i+1 | Revolutionary angle $\theta_i(°)$ | Distance between linkages $d_i$ (mm) | Linkage length $l_i$ (mm) | Torsional angle $\alpha_i(°)$ |
|---|---|---|---|---|---|
| 1,2,3,4,5 | 1~6 | 0 | 0 | 0 | 0 |
| 6 | 6~7 | 90 | $d_1$ | 0 | 90 |
| 7 | 7~8 | 0 | 0 | 0 | 0 |
| 8 | 8~9 | 180 | $d_2$ | 0 | 90 |
| 9 | 9~10 | -90 | $d_3$ | 0 | 90 |

(continued)

| Index j | Linkage i~i+1 | Revolutionary angle $\theta_i$(°) | Distance between linkages $d_i$ (mm) | Linkage length $l_i$ (mm) | Torsional angle $\alpha_i$(°) |
|---|---|---|---|---|---|
| 10,11 | 10~12 | 0 | 0 | 0 | 0 |
| 12 | 12~13 | 180 | $d_4$ | 0 | 90 |
| 13 | 13~14 | -90 | 0 | 0 | 90 |
| 14,15 | 14~16 | 0 | 0 | 0 | 0 |
| 16 | 16~17 | -90 | $d_4$ | 0 | 90 |
| 17,18 | 17~19 | 0 | 0 | 0 | 0 |

Through verification of these parameter tables, this method for establishing coordinates and the parameter tables determined on basis of the coordinate system are correct.

The graphical transformation parameter table is brought into the end terminal posture calculation equation (I) in order to calculate the end terminal postures of the robot:

$$\text{rot}(z, \theta_i) * \text{trans}(0, 0, d_i) * \text{trans}(a_i, 0, 0) * \text{rot}(x, \alpha_i) \quad (I):$$

The postures of the end terminals of the movement axis of the non-destructive testing robot are calculated to obtain an end terminal posture matrix:

$$\begin{bmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i\sin\theta_i \\ 0 & \sin\alpha_i & \cos\alpha_i & d_i \\ 0 & 0 & 0 & 1 \end{bmatrix} \quad (II);$$

Wherein

$$\text{rot}(z, \theta_i) = \begin{bmatrix} \cos\theta_i & -\sin\theta_i & 0 & 0 \\ \sin\theta_i & \cos\theta_i & 0 & 0 \\ 0 & 0 & 1 & 0 \\ 0 & 0 & 0 & 1 \end{bmatrix} \quad, \quad \text{trans}(0, 0, d_i) = \begin{bmatrix} 1 & 0 & 0 & 0 \\ 0 & 1 & 0 & 0 \\ 0 & 0 & 1 & d_i \\ 0 & 0 & 0 & 1 \end{bmatrix} \quad,$$

$$\text{trans}(a_i, 0, 0) = \begin{bmatrix} 1 & 0 & 0 & 0 \\ 0 & 1 & 0 & 0 \\ 0 & 0 & 1 & d_i \\ 0 & 0 & 0 & 1 \end{bmatrix}, \quad \text{rot}(x, \alpha_i) = \begin{bmatrix} 1 & 0 & 0 & 0 \\ 0 & \cos\alpha_i & -\sin\alpha_i & 0 \\ 0 & \sin\alpha_i & \cos\alpha_i & 0 \\ 0 & 0 & 0 & 1 \end{bmatrix}.$$

Take the parameters in the second row in the table as an example, the corresponding parameters therein are $\theta_i$ **= 90, $d_i$ = 5.773, $a_i$ = 0, $\alpha_i$ = 90** . The end terminal posture matrix is obtained by bringing the parameters into the equation

$$\begin{bmatrix} 0 & 0 & 1 & 0 \\ 1 & 0 & 0 & 0 \\ 0 & 1 & 0 & 5.773 \\ 0 & 0 & 0 & 1 \end{bmatrix}.$$

Encoder return values of eleven-degree-of-freedom are required to be obtained in real time when there is an eleven-degree-of- freedom movement axis in the non-destructive testing robot. The non-destructive testing robot is connected with an industrial Ethernet. The encoder return values of each degree-of-freedom are read through the instructions of the control cards. The movement distance of the linear axis and the movement angle of the revolutionary axis are obtained through calculation. Physical quantities represented by the encoder return values are calculated through the determination of the three-dimension module coordinates and the realization of the graphics transformation algorithms. The tree-dimension model is driven to transform by the solutions driving the three-dimension module to transform which are obtained after the algorithms calculation, and synchronous movement of the robot in virtual reality and the actual non-destructive testing robot is achieved.

During the display procedure of the three-dimension model, three-dimension graphics are rotated and scaled by operation personnel through input devices like a keyboard and a mouse, etc. without error screens like distortion, deformation and disappearance, etc. in graphics. The accuracy of the three-dimension model is guaranteed, and the structure of the reactor pressure vessel and the accuracy in the result of the robot's movement during software simulation are assured. Detailed indicators are as follows: 1. Translational error $\leq$ 0.5mm, rotational angle error $\leq$ 0.1°; 2. Data acquisition rate: $\geq$ 95%; 3. Dynamic information timeliness rate: $\geq$ 95%; 4. Static information comprehensive rate: $\geq$ 95%; 5. Information accuracy: $\geq$ 95%.

For time characteristics, in order to guarantee the instantaneity of software simulation and data transmission, it should be assured that: 1. The response time for communication $\leq$ 0.5 seconds; 2. The refreshing period of real-time information $\leq$ 1 second; 3. The duration time of the operation of software $\geq$7 days.

When a user sends testing instructions, the user's instructions are received by the non-destructive testing robot and are transmitted to a motor driver of the non-destructive testing robot and a motor controlled by the motor driver through parsing the instructions and motion trails of the movement axes. Each movement axis is driven by the motor to move along the motion trails to arrive at a target coordinate for a test.

In an actual non-destructive testing procedure, the possible position of the target to be tested has been determined, the installation position of the non-destructive testing robot has been determined, the spatial position coordinate of the target to be tested and the motion trails of each movement axis of the non-destructive testing robot have been determined. At that time, operation in accordance with pre-determined trails can be performed (which is referred to as a positive solution). However, in general, motion trails are required to be obtained on basis of the spatial position coordinate of the target to be tested, the position coordinate of the end on each movement axis of the non-destructive testing robot through the calculations of the above three-dimension spatial algorithms (which is referred to as a negative solution). In fact, the pre-determined motion trails during a positive solution procedure are also obtained on basis of the spatial position coordinate of the target to be tested, the position coordinate of the end on each movement axis of the non-destructive testing robot through the calculations of the above three-dimension spatial algorithms.

Each movement axis moves in accordance with the motion trails during the non-destructive test. The movement conditions of the movement axes are required to be scanned. A non-destructive test by a probe is only performed if and only if all movement axes move in place. Whether each movement axis moves in place can be judged through setting several waypoints on the motion trails. When some certain movement axis moves to a waypoint on the motion trails, a pulse prompt signal is sent to a user through the control card that controls the movement of the movement axis and the movement axis is determined to move to a determined position.

Among other things, the host computer is a PC, the configuration of which is: Dell Precision T3500, one Xeon W3503 CPU processor, 16G memory, 2048GB hard disk, operating system running on a Windows XP SP3. The stroke range of each degree-of-freedom movement axis of the non-destructive testing robot can be set in advance. The stroke range of the X axle: 0-1200mm, the stroke range of the Y axle: 0-1000mm, the stroke range of the Z axle: 0-600mm, and the W axle is a revolutionary axis that can be rotated 360° in a circumferential direction. Axial positioning accuracy is $\pm$0.05mm, and repeated positioning accuracy is $\pm$0.05mm. Circumferential positioning accuracy is $\pm$0.1°, and repeated positioning accuracy is $\pm$0.05°.

A four-axes motion control card of Galil Company is used as the control card, which can perform double closed-loop (a speed loop and a position loop) servo control on four motion axes and can receive real-time position signals and zero signal feedback after the protection by optoelectronic isolation. Generally, the motion control card and the PC constitute a master-slave mode control structure: the PC is responsible for tasks in managing the human-machine interface and real-time monitoring of the control system, etc. (for example, the management of a keyboard and a mouse, the display of system status, the planning of motion trails, the transmitting of control instructions, the monitoring of external signals, etc.). All details of movement control (including the output of pulses and direction signals, processing of automatic lifting speed, testing of signals like the original point and the limiting and so on) are accomplished by the control card. Built-in functions comprise functions of S-type, T-type acceleration, linear interpolation and circular interpolation, multi-axis synchronous motion, etc. Low-level software and hardware for realizing motion control are integrated together and are provided with functions to control various speeds and positions required for the control of the servomotor, and these functions can be called conveniently from a computer, thus simplifying the programming of control software.

The servomotor is driven through a servo-driver. A high-power PWM driver manufactured by MAXON Company can be used as the servo-driver for driving a DC brush servomotor. The output power range is 10-250W and design requirements are satisfied. Because the high-frequency components of a PWM-type driver interferes greatly on encoder signals and ultrasonic/eddy current signals, a filtering circuit is designed on hardware and part of a filtering algorithm is added on software to suppress electro-magnetic interference.

A Mingwei power supply from Taiwan with high reliable system, mature technology and high cost performance is used as the power driving of the servomotor. These products have now been widely applied in various testing devices so far.

Upon scanning under a testing environment, the error thereof can be controlled $\leq$ 1% with extremely high accuracy; and because the control can be performed through a PC, a test controlled by remote-end network can be realized and accumulation of radiation dose to human being is avoided. Compared with available manual modes, the testing flow is effectively simplified, the testing precision and speed are improved and the radiation dose level for testing personnel on duty is decreased by the non-destructive testing robot intelligent testing system and the intelligent testing method.

The above examples are for illustrating the technical considerations and features of the invention only, the purpose thereof lies in making a person who is familiar with this technology understand the content of the invention and implement hereby, and the scope of the invention cannot be limited thereby.

**Claims**

1. An intelligent testing method of a non-destructive testing robot in a nuclear reactor pressure vessel based on virtual reality technology,
   wherein the reactor pressure vessel is a nuclear power station reactor pressure vessel and the non-destructive testing robot in the method is provided with installation arms (1) arranged to cooperate with a specific installation station in the nuclear power station reactor pressure vessel, and a pneumatic centering device (2) is arranged at the end of each installation arm (1) to plug with the specific installation station of the nuclear power station reactor pressure vessel; an upright post (3) is arranged between the installation arms (1), and the installation arms (1) are fixedly connected with the upright post (3), the lower ends of the upright post (3) are connected with a plurality of mechanical arms (4) for a non-destructive test; a probe tool holder (6) is fixed at the end of each mechanical arm (4);
   wherein each mechanical arm (4) of the non-destructive testing robot is a mechanism in which a plurality of middle linkages are connected between two terminal linkages,
   wherein one terminal linkage is arranged at the end of the respective mechanical arm (4) at the lower end of the upright post (3), and the other terminal linkage is arranged at the other end of the respective mechanical arm (4), and linkages are connected with each other through a joint; the linkages from the one terminal linkage to the other terminal linkage are numbered as 0, 1, 2, ..., i, the motion pair that connects an $(i-1)^{th}$ linkage with an $i^{th}$ linkage is marked as an $i^{th}$ joint, an $i^{th}$ coordinate system is established at the $i^{th}$ joint, a coordinate system $F_i$ defined by an origin $O_i$ and coordinate axles $X_i$, $Y_i$ and $Z_i$ are fixedly connected to the $(i-1)^{th}$ linkage,
   wherein a non-destructive testing robot simulation model and a reactor pressure vessel simulation model are constructed through three-dimension modeling software, and the position calibration of each degree-of-freedom movement axis of the non-destructive testing robot is started by using the reactor pressure vessel as an application scenario of the three-dimension modeling software, after the non-destructive testing robot simulation model and reactor pressure vessel simulation model are initiated, the method comprises the following steps:

   (1) a non-destructive testing robot for a non-destructive test is installed to a pre-set position inside the reactor pressure vessel;
   (2) the position calibration of each degree-of-freedom movement axis is performed after each degree-of-freedom movement axis of the non-destructive testing robot is recovered to an initial state, and a global coordinate system for the integrity of each mechanical arm and an axle coordinate system of each degree-of-freedom movement axis are constructed;
   (3) a corresponding relationship between the non-destructive testing robot simulation model and the simulated and calibrated non-destructive testing robot is established and a corresponding relationship between the reactor pressure vessel simulation model and the simulated and calibrated reactor pressure vessel is established;
   (4) the non-destructive testing robot simulation model transforms the position and posture of the non-destructive testing robot simulation model in a three-dimension virtual environment on the basis of the real-time position and posture information feedback values of each degree-of-freedom movement axis of the non-destructive testing robot acquired thereby, and synchronous movement of the non-destructive testing robot is virtually displayed and controlled for a non-destructive test.

2. The non-destructive testing robot intelligent testing method of claim 1, **characterized in that** the specific steps for controlling the synchronized movement of the non-destructive testing robot in step (4) of the method comprise:

   (1) the encoder feedback values of each degree-of-freedom movement axis of the non-destructive testing robot are sent to a control card or a control box according to a preset period after each degree-of-freedom movement axis of the non-destructive testing robot is moved;

(2) the encoder feedback values of each degree-of-freedom movement axis of the non-destructive testing robot are read by the control card or the control box and are transformed to obtain the movement distance of a linear axis and the movement angle of a rotating axis in each degree-of-freedom movement axis of the non-destructive testing robot;

(3) through the determination of a three-dimension coordinate and a graphical transformation algorithm, by the non-destructive testing robot simulation model and the reactor pressure vessel simulation model, the encoder feedback values are used to obtain a solution for driving the non-destructive testing robot simulation model to be transformed, the non-destructive testing robot simulation model is driven to be transformed, and synchronized movement of the non-destructive testing robot simulation model in virtual reality and the actual non-destructive testing robot is achieved.

3. The non-destructive testing robot intelligent testing method of claim 1, **characterized in that** the coordinate system $F_i$ is defined as follows:

1) Zi is defined as the axis of the $i^{th}$ joint; and there are two possibilities that the positive direction of the axis is in a straight line, the $Z_i$ axle of a moving joint is arbitrarily positioned and the direction thereof is defined by the joint;

2) $X_i$ is defined as the common perpendicular line of $Z_{i-1}$ and $Z_i$, the direction thereof is that $Z_{i-1}$ points to $Z_i$; if $Z_{i-1}$ intersects with $Z_i$, the positive direction of Xi can be arbitrary, and if unit vectors $i_i$, $k_{i-1}$ and $k_i$ are respectively fixed on $X_i$, $Z_{i-1}$ and $Z_i$, $i_i$ is defined as $k_{i-1} \times k_i$; if $Z_{i-1}$ is parallel with $Z_i$, $X_i$ is specified to pass the original point of the $(i-1)^{th}$ coordinate system;

3) the distance between $Z_i$ and $Z_{i+1}$ is defined as $a_i$, which is a non-negative value;

4) $b_i$ is defined by the coordinate of $Z_i$ that is the point of intersection of $Z_i$ and $X_{i+1}$; the absolute value of $b_i$ is the distance between $X_i$ and $X_{i+1}$, which is referred to as the deviation between continuous common perpendicular lines;

5) The angle between Zi and $Z_{i+1}$ is defined as $\alpha_i$, whose positive direction of measurement is relevant to the definition of $X_{i+1}$, which is referred to as the torsional angle of a continuous pair of axles;

6) the angle between Zi and $Z_{i+1}$ is defined as $\theta_i$, whose positive direction of measurement is relevant to the definition of $Z_i$;

the global coordinate system for the integrity of each mechanical arm (4) of the non-destructive testing robot is established in accordance with the above definition.

4. The non-destructive testing robot intelligent testing method of claim 3, **characterized in that** the position and posture transformation in step (4) of the method is in accordance with arithmetic operation(I):

$$rot(z, \theta_i) * trans(0, 0, d_i) * trans(a_i, 0, 0) * rot(x, \alpha_i) \quad (I);$$

the postures of the end terminals of the movement axis of the non-destructive testing robot are calculated to obtain an end terminal posture matrix:

$$\begin{bmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i\sin\theta_i \\ 0 & \sin\alpha_i & \cos\alpha_i & d_i \\ 0 & 0 & 0 & 1 \end{bmatrix} \quad (II);$$

wherein

$$rot(z, \theta_i) = \begin{bmatrix} \cos\theta_i & -\sin\theta_i & 0 & 0 \\ \sin\theta_i & \cos\theta_i & 0 & 0 \\ 0 & 0 & 1 & 0 \\ 0 & 0 & 0 & 1 \end{bmatrix}, \quad trans(0, 0, d_i) = \begin{bmatrix} 1 & 0 & 0 & 0 \\ 0 & 1 & 0 & 0 \\ 0 & 0 & 1 & d_i \\ 0 & 0 & 0 & 1 \end{bmatrix},$$

3

$$\text{trans}(a_i, 0, 0) = \begin{bmatrix} 1 & 0 & 0 & 0 \\ 0 & 1 & 0 & 0 \\ 0 & 0 & 1 & d_i \\ 0 & 0 & 0 & 1 \end{bmatrix}, \quad \text{rot}(x, \alpha_i) = \begin{bmatrix} 1 & 0 & 0 & 0 \\ 0 & \cos\alpha_i & -\sin\alpha_i & 0 \\ 0 & \sin\alpha_i & \cos\alpha_i & 0 \\ 0 & 0 & 0 & 1 \end{bmatrix};$$

among other things, the graphical transformation parameter table used during the position and posture transformation is:

| Index j | Linkage i~i+1 | Revolutionary angle $\theta_i$ (o) | Distance between linkages $d_i$ (mm) | Linkage length $l_i$ (mm) | Torsional angle $\alpha_i$ (o) |
|---|---|---|---|---|---|
| 1,2,3,4,5 | 1~6 | 0 | 0 | 0 | 0 |
| 6 | 6~7 | 90 | $d_1$ | 0 | 90 |
| 7 | 7~8 | 0 | 0 | 0 | 0 |
| 8 | 8~9 | 180 | $d_2$ | 0 | 90 |
| 9 | 9~10 | -90 | $d_3$ | 0 | 90 |
| 10,11 | 10~12 | 0 | 0 | 0 | 0 |
| 12 | 12~13 | 180 | $d_4$ | 0 | 90 |
| 13 | 13~14 | -90 | 0 | 0 | 90 |
| 14,15 | 14~16 | 0 | 0 | 0 | 0 |
| 16 | 16~17 | -90 | $d_4$ | 0 | 90 |
| 17,18 | 17~19 | 0 | 0 | 0 | 0 |

the end terminal posture of each movement axle is obtained when the above graphical transformation parameter table is used and put into end terminal posture matrix (II).

**5.** The non-destructive testing robot intelligent testing method of claim 1, **characterized in that**, when the positions and postures are transformed in step (4) of the method, if there is any interference between the non-destructive testing robot simulation model and the reactor pressure vessel simulation model, the movement of each movement axis of the non-destructive testing robot will be stopped; otherwise the test will be continued to be performed.

**Patentansprüche**

**1.** Intelligentes Testverfahren mit einem zerstörungsfreien Testroboter in einem Druckbehälter eines Kernreaktors auf der Basis von Virtual-Reality-Technologie,
wobei der Reaktordruckbehälter ein Reaktordruckbehälter eines Kernkraftwerks ist und der zerstörungsfreie Testroboter bei dem Verfahren mit Installationsarmen (1) versehen ist, die dazu angeordnet sind, mit einer bestimmten Installationsstation in dem Reaktordruckbehälter des Kernkraftwerks zusammenzuwirken, und eine pneumatische Zentriervorrichtung (2) am Ende jedes Installationsarms (1) dazu angeordnet ist, sich mit der bestimmten Installationsstation des Reaktordruckbehälters des Kernkraftwerks zu verstöpseln; ein aufrechter Pfosten (3) zwischen den Installationsarmen (1) angeordnet ist und die Installationsarme (1) fest mit dem aufrechten Pfosten (3) verbunden sind, die unteren Enden des aufrechten Pfostens (3) mit einer Mehrzahl mechanischer Arme (4) für einen zerstörungsfreien Test verbunden sind; ein Sondenwerkzeughalter (6) am Ende jedes mechanischen Arms (4) befestigt ist;
wobei jeder mechanische Arm (4) des zerstörungsfreien Testroboters ein Mechanismus ist, bei dem eine Mehrzahl mittlerer Verkettungen zwischen zwei Endverkettungen eingebunden ist,
wobei eine Endverkettung am Ende des jeweiligen mechanischen Arms (4) am unteren Ende des aufrechten Pfostens (3) angeordnet ist und die andere Endverkettung am anderen Ende des jeweiligen mechanischen Arms (4) angeordnet ist und die Verkettungen über ein Gelenk miteinander verbunden sind; die Verkettungen von der einen Endverkettung zu der anderen Endverkettung als 0, 1, 2, ..., i nummeriert sind, das Bewegungspaar, das eine (i-1)te Verkettung mit einer i-ten Verkettung verbindet, als ein i-tes Gelenk markiert ist, ein i-tes Koordinatensystem an dem i-ten Gelenk angelegt ist, ein Koordinatensystem $F_i$, das durch einen Ursprung $O_i$ und Koordinatenachsen

EP 3 059 738 B1

$X_i$, $Y_i$ und $Z_i$ definiert wird, fest mit der (i-1)ten Verkettung verbunden ist,
wobei mittels Software zur dreidimensionalen Modellierung ein einen zerstörungsfreien Testroboter simulierendes Modell und ein Reaktordruckbehälter-Simulationsmodell konstruiert werden und die Positionskalibrierung jeder Freiheitsgrad-Bewegungsachse des zerstörungsfreien Testroboters gestartet wird, indem der Reaktordruckbehälter als ein Anwendungsszenario der Software zur dreidimensionalen Modellierung verwendet wird, nachdem das den zerstörungsfreien Testroboter simulierende Modell und das Reaktordruckbehälter-Simulationsmodell initiiert wurden,
wobei das Verfahren folgende Schritte umfasst:

(1) ein zerstörungsfreier Testroboter für einen zerstörungsfreien Test wird an einer vorab festgelegten Position im Inneren des Reaktordruckbehälters installiert;
(2) die Positionskalibrierung jeder Freiheitsgrad-Bewegungsachse wird durchgeführt, nachdem jede Freiheitsgrad-Bewegungsachse des zerstörungsfreien Testroboters in einen Anfangszustand zurückversetzt wurde, und ein globales Koordinatensystem für die Gesamtheit jedes mechanischen Arms und ein Achsenkoordinatensystem jeder Freiheitsgrad-Bewegungsachse werden konstruiert;
(3) eine entsprechende Beziehung zwischen dem den zerstörungsfreien Testroboter simulierenden Modell und dem simulierten und kalibrierten zerstörungsfreien Testroboter wird hergestellt und eine entsprechende Beziehung zwischen dem Reaktordruckbehälter-Simulationsmodell und dem simulierten und kalibrierten Reaktordruckbehälter wird hergestellt;
(4) das den zerstörungsfreien Testroboter simulierende Modell transformiert die Position und Lage des den zerstörungsfreien Testroboter simulierenden Modells in einer dreidimensionalen virtuellen Umgebung auf der Basis der Echtzeitposition und von dadurch gewonnenen Lageinformationsrückmeldewerten jeder Freiheitsgrad-Bewegungsachse des zerstörungsfreien Testroboters und eine synchrone Bewegung des zerstörungsfreien Testroboters wird für einen zerstörungsfreien Test virtuell angezeigt und gesteuert.

2. Intelligentes Testverfahren mit zerstörungsfreiem Testroboter nach Anspruch 1, **dadurch gekennzeichnet, dass** die konkreten Schritte zum Steuern der synchronisierten Bewegung des zerstörungsfreien Testroboters in Schritt (4) des Verfahrens umfassen:

(1) die Encoder-Rückmeldewerte jeder Freiheitsgrad-Bewegungsachse des zerstörungsfreien Testroboters werden gemäß einem vorab festgelegten Zeitraum, nachdem jede Freiheitsgrad-Bewegungsachse des zerstörungsfreien Testroboters bewegt wurde, an eine Steuerkarte oder einen Steuerkasten gesendet;
(2) die Encoder-Rückmeldewerte jeder Freiheitsgrad-Bewegungsachse des zerstörungsfreien Testroboters werden durch die Steuerkarte oder den Steuerkasten gelesen und transformiert, um den Bewegungsabstand einer linearen Achse und den Bewegungswinkel einer sich drehenden Achse in jeder Freiheitsgrad-Bewegungsachse des zerstörungsfreien Testroboters zu erhalten;
(3) durch die Bestimmung einer dreidimensionalen Koordinate und eines Algorithmus zur grafischen Transformation durch das den zerstörungsfreien Testroboter simulierende Modell und das Reaktordruckbehälter-Simulationsmodell werden die Encoder-Rückmeldewerte verwendet, um eine Lösung zum Vorantreiben des den zerstörungsfreien Testroboter simulierenden Modells, so dass es transformiert wird, zu erhalten, das den zerstörungsfreien Testroboter simulierende Modell wird so vorangetrieben, dass es transformiert wird, und eine synchronisierte Bewegung des den zerstörungsfreien Testroboter simulierenden Modells in einer virtuellen Realität und des tatsächlichen zerstörungsfreien Testroboters wird erreicht.

3. Intelligentes Testverfahren mit zerstörungsfreiem Testroboter nach Anspruch 1, **dadurch gekennzeichnet, dass** das Koordinatensystem $F_i$ wie folgt definiert ist:

1) $Z_i$ ist als die Achse des i-ten Gelenks definiert; und es gibt zwei Möglichkeiten, dass die positive Richtung der Achse in einer geraden Linie vorliegt, die $Z_i$-Achse eines sich bewegenden Gelenks beliebig positioniert ist und die Richtung davon durch das Gelenk definiert wird;
2) $X_i$ ist als die gemeinsame senkrechte Linie von $Z_{i-1}$ und $Z_i$ definiert, die Richtung davon ist, dass $Z_{i-1}$ zu $Z_i$ weist; wenn $Z_{i-1}$ sich mit $Z_i$ schneidet, kann die positive Richtung von $X_i$ beliebig sein und wenn Einheitsvektoren $i_i$, $k_{i-1}$ und $k_i$ entsprechend an $X_i$, $Z_{i-1}$ und $Z_i$ fixiert sind, ist $i_i$ als $k_{i-1} \times k_i$ definiert; wenn $Z_{i-1}$ parallel zu $Z_i$ ist, ist bezüglich $X_i$ vorgeschrieben, dass sie durch den Ursprungspunkt des (i-1)ten Koordinatensystems verläuft;
3) der Abstand zwischen $Z_i$ und $Z_{i+1}$ ist als $\alpha_i$ definiert, was ein nicht negativer Wert ist;
4) $b_i$ wird durch die Koordinate von $Z_i$ definiert, die der Schnittpunkt von $Z_i$ und $X_{i+1}$ ist; der Absolutwert von $b_i$ ist der Abstand zwischen $X_i$ und $X_{i+1}$, was als die Abweichung zwischen durchgehenden gemeinsamen senkrechten Linien bezeichnet wird;

5) der Winkel zwischen $Z_i$ und $Z_{i+1}$ ist als $\alpha_i$ definiert, dessen positive Messrichtung für die Definition von $X_{i+1}$ relevant ist, was als der Torsionswinkel eines durchgehenden Paars von Achsen bezeichnet wird;

6) der Winkel zwischen $Z_i$ und $Z_{i+1}$ ist als $\theta_i$ definiert, dessen positive Messrichtung für die Definition von $Z_i$ relevant ist;

wobei das globale Koordinatensystem für die Gesamtheit jedes mechanischen Arms (4) des zerstörungsfreien Testroboters gemäß der obigen Definition erstellt wird.

4. Intelligentes Testverfahren mit zerstörungsfreiem Testroboter nach Anspruch 3, **dadurch gekennzeichnet, dass** die Positions- und Lagetransformation in Schritt (4) des Verfahrens gemäß der arithmetischen Operation (I) erfolgt:

$$\mathbf{rot(z,\theta_i) * trans(0,0,d_i) * trans(a_i,0,0) * rot(x,\alpha_i)} \quad (I);$$

die Lagen der Endpunkte der Bewegungsachse des zerstörungsfreien Testroboters berechnet werden, um eine Endpunktlage-Matrix zu erhalten:

$$\begin{bmatrix} \cos\theta_i & -\sin\theta_i\cos\alpha_i & \sin\theta_i\sin\alpha_i & a_i\cos\theta_i \\ \sin\theta_i & \cos\theta_i\cos\alpha_i & -\cos\theta_i\sin\alpha_i & a_i\sin\theta_i \\ 0 & \sin\alpha_i & \cos\alpha_i & d_i \\ 0 & 0 & 0 & 1 \end{bmatrix} \quad (II);$$

wobei

$$\mathbf{rot(z,\theta_i)} = \begin{bmatrix} \cos\theta_i & -\sin\theta_i & 0 & 0 \\ \sin\theta_i & \cos\theta_i & 0 & 0 \\ 0 & 0 & 1 & 0 \\ 0 & 0 & 0 & 1 \end{bmatrix} \quad , \quad \mathbf{trans(0,0,d_i)} = \begin{bmatrix} 1 & 0 & 0 & 0 \\ 0 & 1 & 0 & 0 \\ 0 & 0 & 1 & d_i \\ 0 & 0 & 0 & 1 \end{bmatrix} \quad ,$$

$$\mathbf{trans(a_i,0,0)} = \begin{bmatrix} 1 & 0 & 0 & 0 \\ 0 & 1 & 0 & 0 \\ 0 & 0 & 1 & d_i \\ 0 & 0 & 0 & 1 \end{bmatrix}, \quad \mathbf{rot(x,\alpha_i)} = \begin{bmatrix} 1 & 0 & 0 & 0 \\ 0 & \cos\alpha_i & -\sin\alpha_i & 0 \\ 0 & \sin\alpha_i & \cos\alpha_i & 0 \\ 0 & 0 & 0 & 1 \end{bmatrix};$$

unter anderem die Tabelle von Parametern zur grafischen Transformation, die während der Positions- und Lagetransformation verwendet wird, ist:

| Index j | Verkettung i~i+1 | Drehwinkel $\theta_i$ (o) | Abstand zwischen den Verkettungen $d_i$ (mm) | Verkettungs länge $l_i$ (mm) | Torsionswinkel $\alpha_i$ (o) |
|---|---|---|---|---|---|
| 1, 2, 3, 4, 5 | 1~6 | 0 | 0 | 0 | 0 |
| 6 | 6~7 | 90 | $d_1$ | 0 | 90 |
| 7 | 7~8 | 0 | 0 | 0 | 0 |
| 8 | 8~9 | 180 | $d_2$ | 0 | 90 |
| 9 | 9~10 | -90 | $d_3$ | 0 | 90 |
| 10, 11 | 10~12 | 0 | 0 | 0 | 0 |
| 12 | 12~13 | 180 | $d_4$ | 0 | 90 |
| 13 | 13~14 | -90 | 0 | 0 | 90 |
| 14, 15 | 14~16 | 0 | 0 | 0 | 0 |
| 16 | 16~7 | -90 | $d_4$ | 0 | 90 |

(fortgesetzt)

| Index j | Verkettung i~i+1 | Drehwinkel $\theta_i$ (o) | Abstand zwischen den Verkettungen $d_i$ (mm) | Verkettungs länge $l_i$ (mm) | Torsionswinkel $\alpha_i$ (o) |
|---------|------------------|--------------------------|----------------------------------------------|------------------------------|-------------------------------|
| 17, 18 | 17~19 | 0 | 0 | 0 | 0 |

wobei die Endpunktlage jeder Bewegungsachse erhalten wird, wenn die Tabelle von Parametern zur grafischen Transformation verwendet und in die Endpunktlage-Matrix (II) eingesetzt wird.

**5.** Intelligentes Testverfahren mit zerstörungsfreiem Testroboter nach Anspruch 1, **dadurch gekennzeichnet, dass**, wenn die Positionen und Lagen in Schritt (4) des Verfahrens transformiert werden, wenn es eine Störung zwischen dem den zerstörungsfreien Roboter simulierenden Modell und dem Reaktordruckbehälter-Simulationsmodell gibt, die Bewegung jeder Bewegungsachse des zerstörungsfreien Testroboters gestoppt wird; andernfalls der Test fortgeführt wird.

## Revendications

**1.** Procédé d'essai intelligent par robot d'essai non destructif dans une cuve de réacteur nucléaire sous pression, basé sur la technologie de réalité virtuelle,
où la cuve de réacteur sous pression est une cuve sous pression de réacteur de centrale nucléaire et le robot d'essai non destructif du procédé est pourvu de bras d'installation (1) prévus pour coopérer avec une station d'installation spécifique dans la cuve sous pression de réacteur de centrale nucléaire, et où un dispositif de centrage pneumatique (2) est prévu à l'extrémité de chaque bras d'installation (1) pour être en prise avec la station d'installation spécifique de la cuve sous pression de réacteur de centrale nucléaire ; un montant vertical (3) est prévu entre les bras d'installation (1), et les bras d'installation (1) sont fixement raccordés au montant vertical (3), les extrémités inférieures du montant vertical (3) sont raccordées à une pluralité de bras mécaniques (4) pour un essai non destructif ; un porte-outil de sonde (6) est fixé à l'extrémité de chaque bras mécanique (4) ;
où chaque bras mécanique (4) du robot d'essai non destructif est un mécanisme où une pluralité d'articulations centrales sont raccordées entre deux articulations terminales,
où une articulation terminale est prévue à l'extrémité du bras mécanique (4) correspondant à l'extrémité inférieure du montant vertical (3), et l'autre articulation terminale est prévue à l'autre extrémité du bras mécanique (4) correspondant, et les articulations sont raccordées l'une à l'autre par un joint ; les articulations sont numérotées 0, 1, 2, ..., i en partant de la première articulation terminale jusqu'à l'autre articulation terminale, le joint reliant une $(i-1)^e$ articulation à une $i^e$ articulation étant indiqué comme $i^e$ joint, un $i^e$ système de coordonnées est créé au $i^e$ joint, un système de coordonnées $F_i$ défini par une origine $O_i$ et des axes de coordonnées $X_i$, $Y_i$ et $Z_i$ sont raccordés fixement à la $(i-1)^e$ articulation,
où un modèle de simulation de robot d'essai non destructif et un modèle de simulation de cuve de réacteur sous pression sont construits au moyen d'un logiciel de modélisation en trois dimensions, et l'étalonnage de position de chaque axe de liberté de mouvement du robot d'essai non destructif est lancé en recourant à la cuve de réacteur sous pression comme scénario d'application du logiciel de modélisation en trois dimensions, après initialisation du modèle de simulation de robot d'essai non destructif et du modèle de simulation de cuve de réacteur sous pression, ledit procédé comprenant les étapes suivantes :

(1) un robot d'essai non destructif pour un essai non destructif est installé à une position prédéfinie à l'intérieur de la cuve de réacteur sous pression ;
(2) l'étalonnage de position de chaque axe de liberté de mouvement est exécuté après retour à un état initial de chaque axe de liberté de mouvement du robot d'essai non destructif, et un système de coordonnées global pour l'intégrité de chaque bras mécanique et un système de coordonnées d'axe de chaque axe de liberté de mouvement sont construits ;
(3) une relation correspondante entre le modèle de simulation de robot d'essai non destructif et le robot d'essai non destructif simulé et étalonné est créée, et une relation correspondante entre le modèle de simulation de cuve de réacteur sous pression et la cuve de réacteur sous pression simulée et étalonnée est créée ;
(4) le modèle de simulation de robot d'essai non destructif transforme la position et la posture du modèle de simulation de robot d'essai non destructif dans un environnement virtuel à trois dimensions sur la base des valeurs de retour d'information de position en temps réel et de posture de chaque axe de liberté de mouvement du robot d'essai non destructif alors acquises, et un déplacement synchrone du robot d'essai non destructif est affiché et commandé virtuellement pour un essai non destructif.

2. Procédé d'essai intelligent non destructif par robot selon la revendication 1, **caractérisé en ce que** les étapes spécifiques pour la commande du déplacement synchronisé du robot d'essai non destructif lors de l'étape (4) du procédé comprennent :

(1) les valeurs de retour de codage de chaque axe de liberté de mouvement du robot d'essai non destructif sont transmises à une carte ou à un boîtier de commande suivant une période définie après déplacement de chaque axe de liberté de mouvement du robot d'essai non destructif ;

(2) les valeurs de retour de codage de chaque axe de liberté de mouvement du robot d'essai non destructif sont extraites par la carte ou le boîtier de commande et sont transformées pour obtenir la distance de déplacement d'un axe linéaire et l'angle de déplacement d'un axe de rotation dans chaque axe de liberté de mouvement du robot d'essai non destructif ;

(3) par détermination d'une coordonnée tridimensionnelle et d'un algorithme de transformation graphique par le modèle de simulation de robot d'essai non destructif et le modèle de simulation de cuve de réacteur sous pression, les valeurs de retour de codage sont utilisées afin d'obtenir une solution pour commander la transformation du modèle de simulation de robot d'essai non destructif, la transformation du modèle de simulation de robot d'essai non destructif est commandée, et le déplacement synchronisé du modèle de simulation de robot d'essai non destructif dans la réalité virtuelle et le robot d'essai non destructif effectif sont obtenus.

3. Procédé d'essai intelligent non destructif par robot selon la revendication 1, **caractérisé en ce que** le système de coordonnées $F_1$ est défini comme suit :

1) $Z_i$ est défini comme l'axe du $i^e$ joint ; et deux possibilités sont présentées que la direction positive de l'axe soit en ligne droite, l'axe $Z_i$ d'un joint mobile est positionné arbitrairement et sa direction définie par le joint ;

2) $X_i$ est défini comme ligne perpendiculaire commune de $Z_{i\_1}$ et $Z_i$, sa direction est $Z_{i\_1}$ points vers $Z_i$ ; si $Z_{i\_1}$ croise $Z_i$, la direction positive de $X_i$ peut être arbitraire, et si les vecteurs unitaires $i_i$, $k_{i\_1}$ et $k_i$ sont fixés respectivement sur $X_i$, $Z_{i\_i}$ et $Z_i$, $i_i$ est défini comme $k_{i\_1} x k_i$ ; si $Z_{i\_1}$ est parallèle à $Z_i$, $X_i$ est spécifié pour dépasser le point d'origine du $(i-1)^e$ système de coordonnées ;

3) la distance entre $Z_i$ et $Z_{1+1}$ est définie comme $a_i$, qui est une valeur non négative ;

4) $b_i$ est défini par la coordonnée de $Z_i$ qui est le point d'intersection de $Z_i$ et $X_{i+1}$ ; la valeur absolue de $b_i$ est la distance entre $X_i$ et $X_{i+1}$, laquelle est qualifiée d'écart entre lignes perpendiculaires continues communes ;

5) l'angle entre $Z_i$ et $Z_{i+1}$ est défini comme $\alpha_i$, dont la direction positive de mesure est pertinente pour la définition de $X_{i+1}$, qui est qualifiée d'angle de torsion d'une paire d'axes continue ;

6) l'angle entre $Z_i$ et $Z_{i+1}$ est défini comme $\theta_i$, dont la direction positive de mesure est pertinente pour la définition de $Z_i$ ;

le système de coordonnées global pour l'intégrité de chaque bras mécanique (4) du robot d'essai non destructif est créé conformément à la définition ci-dessus.

4. Procédé d'essai intelligent non destructif par robot selon la revendication 3, **caractérisé en ce que** la transformation de position et de posture lors de l'étape (4) du procédé est en conformité avec l'opération arithmétique (I) :

$$\mathrm{rot}(z, \theta_i) * \mathrm{trans}(0, 0, d_i) * \mathrm{trans}(a_i, 0, 0) * \mathrm{rot}(x, \alpha_i) \quad (I);$$

les postures de terminaux d'extrémité de l'axe de déplacement du robot d'essai non destructif sont calculées pour obtenir une matrice de postures de terminaux d'extrémité :

$$\begin{bmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i\sin\theta_i \\ 0 & \sin\alpha_i & \cos\alpha_i & d_i \\ 0 & 0 & 0 & 1 \end{bmatrix} \quad (II)$$

où

$$rot(z, \theta_i) = \begin{bmatrix} \cos\theta_i & -\sin\theta_i & 0 & 0 \\ \sin\theta_i & \cos\theta_i & 0 & 0 \\ 0 & 0 & 1 & 0 \\ 0 & 0 & 0 & 1 \end{bmatrix} \quad , \quad trans(0, 0, d_i) = \begin{bmatrix} 1 & 0 & 0 & 0 \\ 0 & 1 & 0 & 0 \\ 0 & 0 & 1 & d_i \\ 0 & 0 & 0 & 1 \end{bmatrix}$$

,

$$trans(a_i, 0, 0) = \begin{bmatrix} 1 & 0 & 0 & 0 \\ 0 & 1 & 0 & 0 \\ 0 & 0 & 1 & d_i \\ 0 & 0 & 0 & 1 \end{bmatrix}, \quad rot(x, \alpha_i) = \begin{bmatrix} 1 & 0 & 0 & 0 \\ 0 & \cos\alpha_i & -\sin\alpha_i & 0 \\ 0 & \sin\alpha_i & \cos\alpha_i & 0 \\ 0 & 0 & 0 & 1 \end{bmatrix};$$

entre autres, la table de paramètres de transformation graphique utilisée pendant la transformation de position et de posture transformation est :

| Indice j | Articulation i∼i+1 | Angle de révolution $0_i$ (o) | Distance entre articulations $d_i$ (mm) | Longueur d'articulation $l_i$ (mm) | Angle de torsion $a_i$ (o) |
|---|---|---|---|---|---|
| 1,2,3,4,5 | 1-6 | 0 | 0 | 0 | 0 |
| 6 | 6-7 | 90 | d1 | 0 | 90 |
| 7 | 7-8 | 0 | 0 | 0 | 0 |
| 8 | 8-9 | 180 | d2 | 0 | 90 |
| 9 | 9-10 | -90 | d3 | 0 | 90 |
| 10,11 | 1012 | 0 | 0 | 0 | 0 |
| 12 | 1213 | 180 | d4 | 0 | 90 |
| 13 | 1314 | -90 | 0 | 0 | 90 |
| 14,15 | 1416 | 0 | 0 | 0 | 0 |
| 16 | 1617 | -90 | d4 | 0 | 90 |
| 17,18 | 1719 | 0 | 0 | 0 | 0 |

la posture de terminal d'extrémité de chaque axe de déplacement est obtenue quand la table de paramètres de transformation graphique ci-dessus est utilisée et entrée dans la matrice de postures de terminaux d'extrémité (II).

5. Procédé d'essai intelligent non destructif par robot selon la revendication 1, **caractérisé en ce que**, quand les positions et les postures sont transformées lors de l'étape (4) du procédé, le déplacement de chaque axe de déplacement du robot d'essai non destructif est arrêté en cas d'interférence quelconque entre le modèle de simulation de robot d'essai non destructif et le modèle de simulation de cuve de réacteur sous pression ; l'exécution de l'essai étant poursuivie sinon.

Three-dimension virtual display module

| View operation sub-module | Model hiding sub-module | Initial position setting sub-module | Restora-tion module | Action capturing start module | Capturing accomp-lishment module | Error removing module |

Testing module

Figure 1

Host computer

Control card

Servomotor

Non-destructive testing robot

Figure 2

Figure 3

Figure 4

Figure 5

Figure 6

A non-destructive testing robot performs a
fundamental movement control function test
after being assembled

Safety function test

Install the non-destructive testing robot
to the specified position in the reactor
pressure vessel

Calibrate the position with eleven-degree-of-freedom
of the non-destructive testing robot through
software control

Open a three-dimension virtual display interface for
synchronization after the position calibration is determined
to have been finished and the calibrated position is
determined to be correct

A corresponding the posture and position relationship
between hardware devices and simulated devices in
virtual reality is established after the synchronization
is finished

Figure 7

Figure 8

| Non-destructive testing robot | → | Three-dimension real-time display control software | → | Robot in virtual reality |
|---|---|---|---|---|
| Encoder return values of eleven-degree-of-freedom | → | The non-destructive testing robot is connected with an industrial Ethernet, the encoder return values of each degree-of-freedom is read through the instructions of the control cards, the movement distance of the linear axle and the movement angle of the revolutionary axle are obtained through calculation | → Physical quantities represented by the encoder return values are calculated through the determination of the coordinates in the three-dimension module and the realization of the graphics transformation algorithms → | Solutions that drive the three-dimension module to transform are obtained after the algorithms calculation, the tree-dimension model is driven to transform and synchronous movement of the robot in virtual reality and the actual non-destructive testing robot is achieved |

Figure    9

EP 3 059 738 B1

```
                    ╭──────────────╮
                    │    Start     │
                    ╰──────┬───────╯
                           │
                           ▼
   ┌───────────────────────────────────────────────────┐
   │ Install the non-destructive testing robot for a non-│
   │ destructive test to a pre-determined position in the │
   │ reactor pressure vessel to be tested                │
   └───────────────────────┬───────────────────────────┘
                           │
                           ▼
   ┌───────────────────────────────────────────────────┐
   │ Calibrate the position after the movement axle is recovered to an │
   │ initial status and the global coordinate system and the axle      │
   │ coordinate system are established                                 │
   └───────────────────────┬───────────────────────────┘
                           │
                           ▼
   ┌───────────────────────────────────────────────────┐
   │ Determine a target coordinate on the movement axle on basis of the │
   │ position of the object to be tested                               │
   └───────────────────────┬───────────────────────────┘
                           │
                           ▼
   ┌───────────────────────────────────────────────────┐
   │ Establish a corresponding relationship between the simulated       │
   │ model and an actual device                                        │
   └───────────────────────┬───────────────────────────┘
                           │
                           ▼
   ┌───────────────────────────────────────────────────┐
   │ Position and posture transformation is performed by the simulated  │
   │ model on basis of the feedback values of position and posture      │
   │ information of the movement axle in the actual device obtained     │
   │ real-time, synchronized movement of the non-destructive testing    │
   │ robot is virtually displayed and controlled for the non-destructive │
   │ test                                                              │
   └───────────────────────┬───────────────────────────┘
                           │
                           ▼
                    ╭──────────────╮
                    │     End      │
                    ╰──────────────╯
```

Figure 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3862578 A

**Non-patent literature cited in the description**

- **MUTKY, ALAN et al.** Control System For Reactor Vessel Inspection Manipulator. *18th IEEE Intl. Conf. on Control Applications, Part of 2009 IEEE Multi-conference on Systems and Control,* 1312-13